Europäisches Patentamt

European Patent Office

Office européen des brevets

(19)

(11) **EP 1 309 841 B1**

(12) **EUROPÄISCHE PATENTSCHRIFT**

(45) Veröffentlichungstag und Bekanntmachung des Hinweises auf die Patenterteilung:
**14.09.2005 Patentblatt 2005/37**

(21) Anmeldenummer: **01964879.9**

(22) Anmeldetag: **03.08.2001**

(51) Int Cl.⁷: **G01L 23/22**, F02P 5/152

(86) Internationale Anmeldenummer:
**PCT/DE2001/002962**

(87) Internationale Veröffentlichungsnummer:
**WO 2002/014822 (21.02.2002 Gazette 2002/08)**

(54) **KLOPFERKENNUNG BEI BRENNKRAFTMASCHINEN MIT MODIFIZIERUNG BEI ÄNDERUNG EINER FILTERCHARAKTERISTIK ODER ZYLINDERINDIVIDUELLER ÄNDERUNG**

KNOCK RECOGNITION IN INTERNAL COMBUSTION ENGINES WITH MODIFICATIONS BY CHANGING FILTER CHARACTERISTICS OR CYLINDER SPECIFIC CHANGES

DETECTION DE COGNEMENT DANS UN MOTEUR A COMBUSTION INTERNE, AVEC MODIFICATION INTERVENANT LORS DE CHANGEMENT D'UNE CARACTERISTIQUE DE FILTRE OU D'UN CHANGEMENT INDIVIDUEL AU CYLINDRE

(84) Benannte Vertragsstaaten:
**DE FR GB IT**

(30) Priorität: **11.08.2000 DE 10040059**
**02.09.2000 DE 10043363**

(43) Veröffentlichungstag der Anmeldung:
**14.05.2003 Patentblatt 2003/20**

(73) Patentinhaber: **ROBERT BOSCH GMBH**
**70442 Stuttgart (DE)**

(72) Erfinder:
• **SAULER, Juergen**
**70192 Stuttgart (DE)**
• **FRANKE, Steffen**
**CM14 Brentwood, Essex (GB)**

• **UNLAND, Stefan**
**71665 Vaihingen-Kleinglattbach (DE)**
• **TORNO, Oskar**
**71701 Schwieberdingen (DE)**
• **HEINSTEIN, Axel**
**71229 Wimsheim (DE)**
• **KLUTH, Carsten**
**70469 Stuttgart (DE)**
• **HAEMING, Werner**
**74861 Neudenau (DE)**
• **BAEUERLE, Michael**
**71706 Markgroeningen (DE)**

(56) Entgegenhaltungen:
**EP-A- 0 708 320     EP-B- 0 722 562**
**DE-A- 3 434 823     DE-A- 19 549 175**

## Beschreibung

Stand der Technik

Die Erfindung geht aus von Verfahren zur Klopferkennung bei einer Brennkraftmaschine und entsprechenden Vorrichtungen nach der Gattung der Hauptansprüche.

Es ist bekannt, dass bei einer Brennkraftmaschine mit einer Klopfregelung ein Klopferkennungsverfahren durchgeführt wird, in dem der vom Klopfsensor oder von den Klopfsensoren aufgenommene und in ein elektrisches Signal transformierte Körperschall in einer Signalverarbeitungseinrichtung verarbeitet wird. Die Signalverarbeitungseinrichtung, die beispielsweise im Steuergerät der Brennkraftmaschine vorhanden ist, führt eine digitale oder analoge Signalaufbereitung durch. Ein wesentlicher Bestandteil der Signalaufbereitung bzw. der zugehörigen Auswerteschaltung ist ein Bandpaßfilter. Die Charakteristik des Bandpaßfilters, also seine Mittenfrequenz, Güte usw. muß dabei so ausgelegt werden, dass der energetische Schwerpunkt der Klopffrequenzen im Durchlassbereich liegt, während die Frequenzen von Störgeräuschen nach Möglichkeit außerhalb des Durchlassbereiches liegen sollten. Damit werden die Störgeräusche im wesentlichen unterdrückt.

Bei modernen Motoren bzw. Brennkraftmaschinen mit einer Vielzahl von Nebenagregaten und Aktuatoren zeigen die Frequenzen der Störgeräusche ggf. eine starke Drehzahlabhängigkeit. Um eine gute Klopferkennung über das gesamte Drehzahlband gewährleisten zu können, wird daher bei solchen Motoren bzw. Brennkraftmaschinen mit einer drehzahlabhänigen Filtercharakteristik gearbeitet. Eine Einrichtung, die die vorstehend beschriebenen Klopferkennung durchführt, wird in der Druckschrift EP 0 576 650 B1 beschrieben.

Die aus der EP 0 576 650 bekannte Einrichtung zur Klopferkennung umfaßt in ihrem Signalverarbeitungszweig unter anderem ein Bandpaßfilter, dessen Mittenfrequenz abgängig von der Motordrehzahl veränderbar ist. Die Mittenfrequenz wird dabei so gelegt, dass die vom Klopfen verursachten Signalanteile möglichst wenig gefiltert werden, während die Hintergrund- bzw. Störsignale möglichst gut ausgefiltert werden. Da sich die Frequenzen drehzahlabhängig verschieben können, wird ein Bandpaßfilter mit änderbarer Mittenfrequenz eingesetzt. Klopfen wird bei der bekannten Einrichtung in üblicher Weise erkannt, wenn sich ein Integralwert, der aus klopftypischen Signalanteilen gebildet wird, in vorgebbarer Weise von einem von den Hintergundsignalen abhängigen Wert unterscheidet.

Mit einer Änderung der Filtercharakteristik ändert sich im allgemeinen auch das gefilterte Signal, welches ein Maß für das Geräusch der Verbrennung darstellt. Da die Klopferkennung über die Bildung des Verhältnisses virkr aus dem Geräusch bzw. dem sogenannten Klopfintegral ikr der aktuellen Verbrennung und dem über mehrere vergangene Verbrennungen des selben Zylinders gemittelten Geräusch, dem sog. Referenzpegel rkr erfolgt, können Probleme bei der Umschaltung der Filtercharakteristik auftreten. Überschreitet der Wert von virkr=ikr/rkr(old) die Klopferkennungsschwelle ke, so wird auf Klopfen erkannt, d.h. bei ikr>rkr(old)*ke wird Klopfen erkannt.

Die Referenzpegelberechnung erfolgt üblicherweise im klopffreien Betrieb rekursiv gemäß folgender Formel oder einer ähnlichen Formel und wird beispielsweise in der DE-P 195 456 49.1 beschrieben. Es gilt dabei:

$$rkr(new)=(1-1/KRFTP) *rkr(old)+1/KRFTP*ikr.$$

Der Faktor KRFTP wird dabei als sogenannter Nachführfaktor bezeichnet.

Erfolgt von einer zur nächsten Verbrennung eine Änderung der Filtercharakteristik, d.h. wird beispielsweise die Mittenfrequenz des Filters an neue bzw. geänderte Gegebenheiten angepaßt, dann erfährt das aktuelle Verbrennungsgeräusch bzw. das Klopfintegral ikr eine ggf. deutliche Änderung, während der Referenzpegel rkr diese Änderung nur langsam erfährt bzw. nur langsam nachgeführt wird. Besteht die Änderung von ikr insbesondere in einer deutlichen Erhöhung, kann es zu einer sog. Fehlerkennung von Klopfen kommen, dass heißt eine nichtklopfende Verbrennung wird fälschlicherweise als klopfend erkannt. Damit werden Änderungen des Zündwinkels veranlaßt, die eigentlich unnötig sind. Als Ergebnis dieser ersten Fehlerkennung kann es zu weiteren Fehlererkennungen kommen, da das für eine klopfenden Verbrennung gemessene Klopfintegral ikr nicht vollständig in den Referenzpegel rkr eingerechnet wird, sondern sofort durch den Faktor ke geteilt wird, um einen Anstieg von rkr durch das vermeintliche Klopfgeräusch zu vermeiden. Die Berechnung erfolgt nach der Formel:

$$rkr(new)=(1-1/KRFTP)*rkr(old)+1/KRFTP*(ikr/ke)$$

Umgekehrt wird die Klopferkennung bei einer deutlichen Verminderung des Verbrennungsgeräusches für eine bestimmte Zeit taub, d. h. klopfende Verbrennungen werden ggf. nicht erkannt. Die Änderung der Filtercharakteristik führt daher zu einer zeitlich begrenzten Unsicherheit in der Klopferkennung. Außerdem führt jede Fehlerkennung von Klopfen zu einer unnötige Zündwinkelspätverstellung und damit zu entsprechender Einbuße von Leistung und Wirkungsgrad. Andererseits bewirkt die Nichterkennung von klopfenden Verbrennungen einen erhöhten Motorverschleiß.

Aufgabe der Erfindung

Die Aufgabe der Erfindung besteht darin, die Sicherheit bei der Klopferkennung während der Umschaltphase der Filtercharakteristik zu erhöhen. Gelöst wird diese Aufgabe nach den Ansprüchen 1,7,8,12. Es ist ein Algorithmus zur Referenzpegelberechnung umfasst, der so definiert ist, dass das Problem der Fehlerkennung bzw. Nichterkennung in der Umschaltphase der Filtercharakteristik minimiert wird und gleichzeitig nach wie vor eine Erkennung tatsächlicher Klopfer ermöglicht wird. Erfindungsgemäß werden dabei zwei Maßnahmen für die vorbestimmbare Dauer der Umschaltphase vorgeschlagen, die einerseits zu einer Referenzpegelnachführung durch Wahl eines kleineren Referenzpegelnachführfaktors KRFTP führen. Somit werden Änderungen des Grundgeräusches der Brennkraftmaschine bzw. des Motors schneller erfaßt. Andererseits wird bei einer Umschaltung der Filtercharakteristik, die zu einem größeren Grundgeräusch führt, die Klopferkennungsschwelle ke mit einem Faktor FKEFMU1>1 korrigiert, d. h. die Klopferkennung wird unempfindlicher, um Fehlererkennungen zu vermeiden.

Entsprechend erfolgt eine Korrektur mit FKEFMU2<1 bei einer Umschaltung, die zu einem kleineren Grundgeräusch führt. Damit wird weiterhin eine sichere Klopferkennung gewährleistet.

Vorteile der Erfindung

Das erfindungsgemäße Verfahren und die erfindungsgemäße Vorrichtung mit den Merkmalen der unabhängigen Ansprüche hat den Vorteil, dass auch während der Umschaltphase des Filters, also während der Änderung der Filtercharakteristik Fehlererkennungen von Klopfen zuverlässig vermieden werden. Gleichzeitig wird Klopfen auch in dieser Phase sicher erkannt. Erzielt wird dieser Vorteil, indem während der Umschaltphase ein modifiziertes Klopferkennungsverfahren durchgeführt wird, bei dem die Klopferkennungsschwelle unempfindlicher geschaltet wird und/oder die Referenzpegelnachführung modifiziert wird.

Weitere Vorteile der Erfindung werden durch die in den Unteransprüchen angegebenen Maßnahmen erzielt. In vorteilhafter weise wird dabei für die Umschaltphase eine vorgebbare Zeitdauer angenommen, deren Ablauf beispielsweise mittels eines Zählers bestimmt wird.

Die für die modifizierte Klopferkennung benötigten Werte für die Klopferkennungsschwellen und/oder für die Referenzpegelnachführung werden vorteilhafterweise mit Hilfe geeigneter Faktoren, mit denen die üblichen Werte beaufschlagt werden, gebildet.

Weitere Vorteile der in den Unteransprüchen beanspruchten Lösungen sind darin zu sehen, dass unterschiedliche Entfernungen der Klopfsensoren zu den einzelnen Zylindern berücksichtigt werden, da aufgrund der unterschiedlichen Entfernungen der Klopfsensoren zu den einzelnen Zylindern Frequenzverschiebungen der Signale, die aufgrund einer Verbrennung in den Zylindern entstehen, und der Störsignale auftreten. Desweiteren wird berücksichtigt, dass bei unterschiedlichen Drehzahlen eine Frequenzverschiebung der Signale aus der Verbrennung und der Störsignale stattfindet, so dass auch hier der optimale Frequenzbereich beobachtet wird und entsprechend die Klopferkennung optimal durchgeführt werden kann.

Besonders vorteilhaft ist dabei, dass bei einer Verschiebung der Mittenfrequenz des Bandpassfilters der Durchlassbereich zylinderindividuell und/oder drehzahlabhängig verändert wird. Ebenfalls erfolgt eine einfache Veränderung des Durchlassbereichs des Bandpassfilters dadurch, dass die obere und/oder die untere Eckfrequenz des Durchlassbereichs verschoben wird. Ein vorteilhaftes schnelles Auslesen der Mittenfrequenz oder der unteren Eckfrequenz oder der oberen Eckfrequenz des Durchlassbereichs geschieht dadurch, dass die Mittenfrequenz und/oder die untere Eckfrequenz und/oder die obere Eckfrequenz aus einem jeweiligen Kennfeld gelesen wird, wobei die Werte des Kennfelds Werten der Drehzahl und/oder dem jeweiligen Zylinder zugeordnet sind.

Es ist weiterhin vorteilhaft, die Klopferkennungsschwelle und/oder einen zylinderindividuellen Referenzwert für das integrierte Kopfsignal bei der Änderung des Durchlassbereichs des Bandpassfilters so schnell wie möglich anzupassen. Hierzu ist es vorteilhaft, sowohl die Klopferkennungsschwelle als auch einen Nachführfaktor des zylinderindividuellen Referenzwerts des integrierten Klopfsignals bei Änderung des Durchlassbereichs jeweils mit einem Korrekturfaktor zu multiplizieren, so dass eine schnelle Anpassung der Klopferkennung an die zu erwartenden geänderten integrierten Klopfsignale erfolgt.

Die beanspruchten Verfahren zur Klopferkennung laufen vorteilhafterweise im Prozessor eines für die Regelung der Brennkraftmaschine eingesetzten Steuergerätes ab, wobei des Steuergerät selbstverständlich alle Mittel wie Speicher, Verbindungen usw. umfaßt, die für die Berechnungen erforderlich sind und alle benötigten Informationen erhält und nach der Klopferkennung die erforderlichen Gegenmaßnahmen zur Klopfverhinderungen einleitet.

Weitere vorteilhafte Weiterbildungen und Verbesserungen sind der nachfolgenden Beschreibung zu entnehmen.

Zeichnung

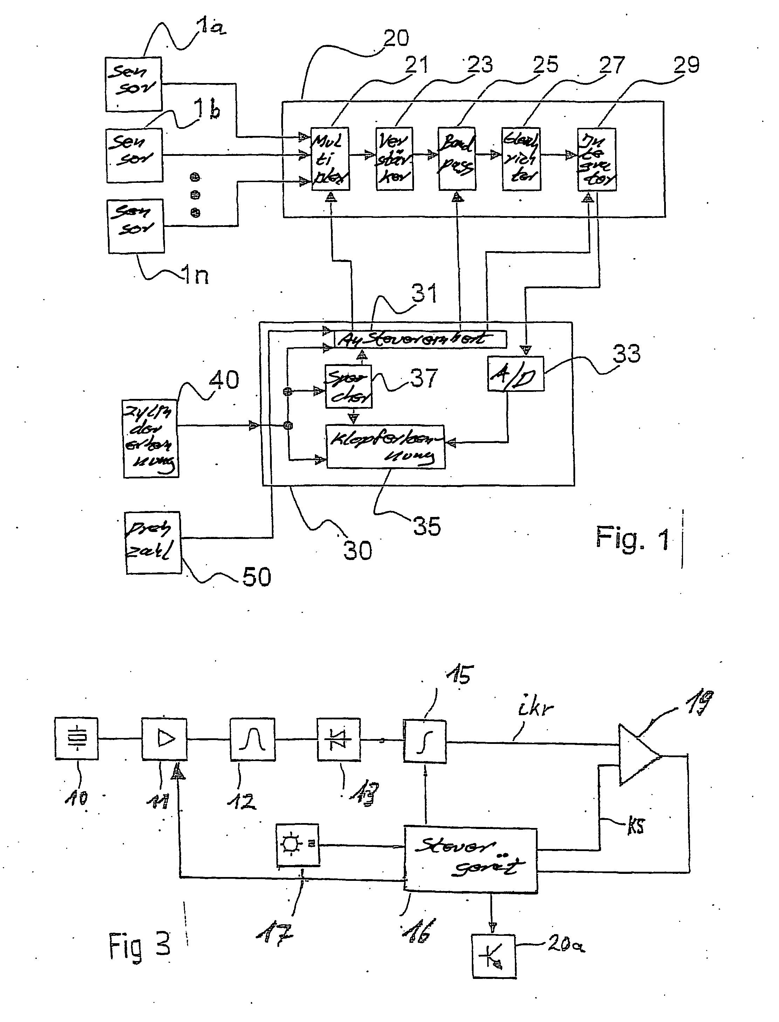

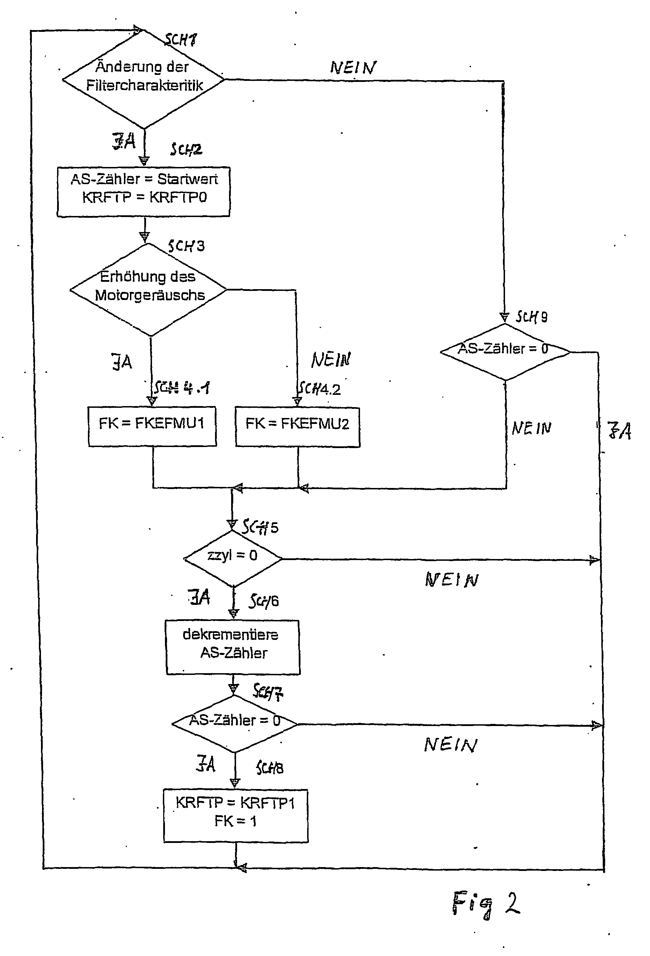

Ausführungsbeispiele der Erfindung sind in den Figuren 1, 2 und 3 dargestellt und werden in der nachfolgenden Beschreibung näher erläutert. Dabe zeigt Figur 1 eine erste erfindungsgemäße Anordnung zur Klopferkennung und Figur 3 zeigt eine zweite erfindungsgemäße Anordnung, in der das erfindungsgemäße Verfahren nach Figur 2 abläuft.

Beschreibung

In der Figur 1, ist eine erfindungsgemäße Vorrichtung zur Klopferkennung einer Brennkraftmaschine dargestellt, die im Weiteren beschrieben wird. Diese erfindungsgemäße Vorrichtung ist in der Lage, das erfindungsgemäße Verfahren zur Klopferkennung für eine Brennkraftmaschine durchzuführen.

Mittels der Klopfsensoren 1a, 1b bis 1n ist es möglich, Signale, die aufgrund der in den Zylindern der Brennkraftmaschine (hier nicht dargestellt) stattfindenden Verbrennung entstehen, zu erfassen. Dabei können die Klopfsensoren sowohl Signale aus dem Brennraum der Zylinder als auch Signale in der Nähe der Zylinder erfassen, wobei sie sowohl im Brennraum als auch außerhalb des Brennraums angeordnet sein können. Derartige Sensoren sind beispielsweise Druckaufnehmer für den Brennraumdruck, eine Ionenstromerfassungen, ein Beschleunigungsaufnehmer, optische Sensoren, Mikrofone oder piezokeramische Sensoren, die beispielsweise in der Zylinderkopfschraube, der Schraube am Kurbelwellen-Hauptlager, der Zündkerze, in der Zylinderkopfdichtung oder am Motorblock angebracht sind. In den meisten heute hergestellten Brennkraftmaschinen sind mehrere Klopfsensoren gleicher Art vorgesehen, wobei es jedoch auch möglich ist, lediglich einen Klopfsensor vorzusehen. Eine Kombination verschiedener Klopfsensorarten ist ebenfalls denkbar.

Die von den Klopfsensoren 1a, 1b, ... 1n erfassten Vibrationen werden als elektrische Signale abgegeben und an eine Auswerteschaltung 20 weitergeleitet. In der Auswerteschaltung 20 ist zunächst ein Multiplexer 21 vorgesehen, an den die Signale der einzelnen Klopfsensoren 11, 12, ..., 1n weiter geleitet werden. Dabei wird, abhängig von jeweiligen Zylinder, bei dem aktuell eine Verbrennung stattfindet und somit auch eine Klopfsignal zu erwarten ist, das Signal eines bestimmten, festlegbaren Klopfsensors 1a, 1b, ... 1n durch den Multiplexer 21 ausgewählt. Diese Auswahl wird durch die Ansteuereinheit 31 des Mikrocomputers 30 gesteuert, die mit dem Multiplexer 21 verbunden ist. Das Ausgangssignal des Multiplexers 21 wird anschließend in der Auswerteschaltung 20 an einen Verstärker 23 weiter gegeben und dort entsprechend der Anforderungen der weiteren Auswertung verstärkt. Dieses verstärkte Signal wird anschließend an einen Bandpassfilter 25 weitergegeben, der ein bestimmtes Frequenzband aus dem verstärkten Signal selektiert. Dabei wird durch den Bandpassfilter 25 ein Frequenzband ausgewählt, in dem für das Klopfen charakteristische Frequenzen liegen. Durch diese Bandpassfilterung können Störsignale, die in einem anderen Bereich liegen, effektiv ausgeblendet werden.

Das bandpassgefilterte Signal wird von dem Bandpassfilter 25 an den Gleichrichter 27 weitergegeben und in dem Gleichrichter 27 gleichgerichtet. Das gleichgerichtete Signal wird anschließend mittels eines Integrators 29 integriert, so dass nun ein Signal zur Verfügung steht, das charakteristisch für die Intensität des Klopfens in einem bestimmten Zylinder der Brennkraftmaschine ist. Dabei wird die Integration des vom Gleichrichter übertragenen Signals nur während eines bestimmten Zeitfensters vorgenommen, wobei das Zeitfenster, das auch Messfenster genannt wird, eine Zeitspanne umfasst, die charakteristisch für das Auftreten von Klopfsignalen ist. Durch die Auswahl des Zeitfensters können analog zur Auswahl des Frequenzbands Störsignale ausgeblendet werden. Das Zeitfenster wird dabei von der Ansteuereinheit 31 des Mikrocomputers 30 vorgegeben, wobei die Ansteuereinheit 31 mit dem Integrator 29 verbunden ist.

Das in der Auswerteschaltung 20 erhaltene integrierte Signal, im Weiteren auch Klopfsignal genannt, wird anschließend an einen Mikrocomputer 30 weitergegeben, wobei es zunächst mittels eines Analog-/Digitalwandlers (A/D Wandler) 33 in ein digitales Signal umgewandelt wird. Das digitale Signal wird weitergeleitet zu einer Klopferkennungseinheit 35, die ebenfalls im Mikrocomputer 30 enthalten ist. In der Klopferkennungseinheit 35 wird das digitalisierte Klopfsignal mit einem Klopferkennungsschwellwert verglichen. Dabei erhält die Klopferkennungseinheit 35 die Klopferkennungsschwelle aus einer Speichereinheit 37, die ebenfalls im Mikrocomputer 30 enthalten ist. In einem einfachen Ausführungsbeispiel wird dann ein Klopfen durch die Klopferkennungseinheit 35 erkannt, wenn das digitalisierte Klopfsignal die Klopferkennungsschwelle überschreitet. Wird die Klopferkennungsschwelle nicht überschritten, so erkennt die Klopferkennungseinheit 35, dass kein Klopfen aufgetreten ist.

In einem weiteren bevorzugten Ausführungsbeispiel wird das aktuelle digitalisierte Klopfsignal $U_{INT,aktuell}$ mit einem Referenzwert $U_{REF,alt}$ des jeweiligen aktuellen Zylinders verglichen. Der Vergleich beinhaltet die Ermittlung einer relativen Klopfintensität RKI, die sich als Quotient aus dem aktuellen Klopfsignal und dem zylinderindividuellen Referenzwert ergibt:

$$RKI = \frac{U_{INT,aktuell}}{U_{REF,alt}}.$$

Die relative Klopfintensität RKI wird anschließend in der Klopferkennungseinheit 35 mit einem Klopferkennungsschwellwert verglichen. Auch in diesem Ausführungsbeispiel wird der Klopferkennungsschwellwert wiederum durch die Speichereinheit 37 bereitgestellt. In einem bevorzugten Ausführungsbeispiel wird dabei durch die Speichereinheit 37 ein zylinderindividueller Klopferkennungsschwellwert für den aktuellen Zylinder bereitgestellt.

In einem weiteren bevorzugten Ausführungsbeispiel wird der zylinderindividuelle Referenzwert $U_{REF,alt}$, der zur Berechnung der relativen Klopfintensität RKI benötigt wird, laufend an den aktuellen Betriebszustand der Brennkraftmaschine angepasst. Dies geschieht mit Hilfe eines Nachführfaktors N, mit dessen Hilfe ein neuer zylinderindividueller Referenzwert $U_{REF,neu}$ berechnet wird, in dem das aktuelle Klopfsignal $U_{INT,aktuell}$ berücksichtigt wird. Die Berechung des neuen zylinderindividuellen Referenzwerts $U_{REF,neu}$ erfolgt vorzugsweise mittels folgender Gleichung:

$$U_{REF,neu} = \frac{N\text{-}1}{N} \times U_{REF,alt} + \frac{1}{N} \times U_{INT,aktuell} \cdot$$

Um zu erkennen, in welchem Zylinder der Brennkraftmaschine gerade eine Verbrennung stattfindet, d.h. ein Klopfen auftreten kann, ist in der Brennkraftmaschine eine Zylindererkennungseinheit 40 vorgesehen, mit deren Hilfe erkannt werden kann, in welchem Zylinder gerade eine Verbrennung stattfindet. Die Zylindererkennung und - zuordnung erfolgt vorzugsweise anhand von Kurbelwellengebern oder Nockenwellengebern. Die von der Zylindererkennungseinheit 40 ermittelten Informationen über den Zylinder, bei dem aktuell ein Verbrennungsvorgang stattfindet, werden sowohl an die Klopferkennungseinheit 35 als auch an die Speichereinheit 37 und einer, ebenfalls in Mikrocomputer 30 enthaltenen Ansteuereinheit für die Auswerteschaltung 31 weitergegeben. In der Klopferkennungseinheit 35 werden die Informationen über den aktuellen Zylinder dazu benötigt, den zylinderindividuellen Referenzwert zur Berechnung der relativen Klopfintensität RKI bereitzustellen. In der Speichereinheit 37 werden die Informationen über den aktuellen Zylinder dazu benutzt, die dem aktuellen Zylinder entsprechende Klopferkennungsschwelle an die Klopferkennungseinheit 35 weiterzugeben.

In der erfindungsgemäßen Vorrichtung zur Klopferkennung ist es möglich, mittels der Ansteuereinheit für die Auswerteschaltung 31 den Bandpassfilter 25 derart zu steuern, dass der Durchlassbereich des Bandpassfilters verändert wird. Dazu ist die Ansteuereinheit für die Auswerteschaltung 31 mit dem Bandpassfilter 25 der Auswerteschaltung 20 verbunden. In einem ersten Ausführungsbeispiel der Erfindung kann dabei der Durchlassbereich des Bandpassfilters 25 zylinderindividuell verändert werden. Dies ist deshalb sinnvoll, da die Klopfsensoren sich in verschiedenen Abständen von den Zylindern der Brennkraftmaschine befinden. Des weiteren können die Zylinder bauliche Unterschiede aufweisen, die dazu führen, dass der für Klopfvorgänge charakteristische Frequenzbereich je nach Zylinder unterschiedlich ist. Die Information über den aktuellen Zylinder erhält die Ansteuereinheit 31 dabei von der Zylindererkennungseinheit 40.

In einem weiteren bevorzugten Ausführungsbeispiel der Erfindung ist weiterhin ein Drehzahlsensor 50 vorgesehen, der die aktuelle Drehzahl der Brennkraftmaschine misst. Vorzugsweise werden zur Messung der Drehzahl Sensoren, die an der Kurbelwelle angebracht sind, genutzt. Die Information über die Drehzahl wird vom Drehzahlsensor 50 an die Ansteuereinheit 31 für die Auswerteschaltung weitergegeben. Die Ansteuereinheit 31 nutzt diese Information und ändert abhängig von der Drehzahl den Durchlassbereich des Bandpassfilters 25. Eine Änderung des Durchlassbereichs des Bandpassfilters 25 wird analog zu dem vorangehenden Ausführungsbeispiel über eine Verbindung zwischen der Ansteuereinheit 31 und dem Bandpassfilter 25 vorgenommen.

Um den Durchlassbereich des Bandpassfilters 25 zu ändern, kann in einem bevorzugten Ausführungsbeispiel durch die Ansteuereinheit 31 die Mittenfrequenz des Bandpassfilters 25 geändert werden. In einem weiteren bevorzugten Ausführungsbeispiel kann die untere Eckfrequenz des Bandpassfilters und/oder die obere Eckfrequenz des Bandpassfilters geändert werden. Dabei wird als Mittenfrequenz die Resonanzfrequenz des Bandpassfilters bezeichnet. Als untere bzw. untere Eckfrequenz des Bandpassfilters wird die Frequenz bezeichnet, unterhalb bzw. oberhalb der eine so hohe Dämpfung des Signals erfolgt, so dass das Signal dort eine vernachlässigbare Intensität aufweist. Beispielsweise kann hierzu die Frequenz herangezogen werden, bei der die Dämpfung 3 dB beträgt. Abhängig von der Filterart können diese Eckfrequenzen jedoch auch anders definiert sein. In einem besonders bevorzugten Ausführungsbeispiel ist dabei die Mittenfrequenz und/oder die untere Eckfrequenz und/oder die obere Eckfrequenz in der Speichereinheit 37 in jeweils einem Kennfeld enthalten, wobei die Werte jeweils Bereichen der Drehzahl und/oder der Zylindernummer zugeordnet sind. Zum Auslesen der Mittenfrequenz und/oder der unteren Eckfrequenz und/oder der oberen Eckfrequenz ist die Speichereinheit 37 mit der Ansteuereinheit 31 verbunden.

In einem weiteren bevorzugten Ausführungsbeispiel der Erfindung wird bei einer Veränderung des Durchlassbereichs des Bandpassfilters die Klopferkennung schnell an diese Veränderung angepasst. Hierzu wird in einem ersten Ausführungsbeispiel die in der Speichereinheit 37 enthaltene Klopferkennungsschwelle bei Änderung des Durchlassbereichs des Bandpassfilters mit einem Schwellwert-Korrekturfaktor multipliziert, der ebenfalls in der Speichereinheit 37 enthalten ist. Die so korrigierte Klopferkennungsschwelle wird dann mit der relativen Klopfintensität RKI in der Klopferkennungseinheit 35 verglichen. Die Korrektur der Klopferkennungsschwelle ist deshalb vorteilhaft, da mit einer Änderung des bei der Klopferkennung erfassten Frequenzbereichs ein geändertes Klopfsignal $U_{INT,aktuell}$ und somit eine geänderte relative Klopfintensität RKI ermittelt wird. Diese Änderung wird erst nach einigen Schritten durch die Anpassung des zylinderindividuellen Referenzwerts $U_{REF,alt}$ ausgeglichen. In einem bevorzugten Ausführungsbeispiel kann ein derartiger Schwellwert-Korrekturfaktor applizierbar vorgegeben werden, wobei in einem weiteren Ausführungsbeispiel auch ein zylinderindividueller Schwellwert-Korrekturfaktor vorgesehen werden kann. Dabei ist in einem bevorzugten Ausführungsbeispiel die in der Speichereinheit 37 enthaltene zylinderindividuelle Klopferkennungsschwelle zusätzlich abhängig von Last und Drehzahl und wird vorzugsweise aus einem in der Speichereinheit 37 enthaltenen Kennfeld, das abhängig von Last, Drehzahl und/oder Zylindernummer ist.

In einem weiteren bevorzugten Ausführungsbeispiel ist ebenfalls für den Nachführfaktor N in der Speichereinheit 37 ein Nachführ-Korrekturfaktor vorgesehen, der mit dem Nachführfaktor N multipliziert wird. Ein derartiger korrigierter Nachführfaktor $N_{KORR}$ wird bei einer Veränderung des Durchlassbereichs des Bandpassfilters statt des Nachführfaktors N benutzt, um einen zylinderindividuellen Referenzwert $U_{REF,neu}$ zu berechnen. Anhand des korrigierten Nachführfaktors $N_{KORR}$ ist es möglich, bei der Berechnung eines neuen zylinderindividuellen Referenzwertes das aktuelle integrierte Klopfsignal stärker bei der Berechnung zu berücksichtigen. Die Klopferkennung wird so schnell an die veränderten Bedingungen durch die Veränderung des Durchlassbereichs des Bandpassfilters angepasst. Der Nachführ-Korrekturfaktor ist in einem bevorzugten Ausführungsbeispiel zylinderindividuell und applizierbar.

In Figur 2 ist ein weiteres Ausführungsbeispiel der Erfindung dargestellt, bei dem das folgende erfindungsgemäße Verfahren, beispielsweise im Rechner des Steuergerätes einer Brennkraftmaschine abläuft:

Wird bei einer Klopferkennungseinrichtung, die ein umschaltbares Filter, insbesonders Bandpaßfilter aufweist, und beispielsweise aus der EP 0 576 560 B1 bekannt ist, im Schritt SCH1 eine Änderung der Filtercharakteristik festgestellt, werden im Schritt SCH2 ein Arbeitsspielzähler auf einen applizierbaren Startwert und der Referenzpegelnachführfaktor KRFTP auf den (kleineren) Wert KRFTP0 gesetzt. Die Definition des Referenzpegelnachführungsfaktors kann der genannten Druckschrift entnommen werden. Der Arbeitsspielzähler bestimmt dabei die Dauer der Umschaltphase. Im Schritt SCH3 wird bestimmt, ob die Änderung der Filtercharakteristik zu einer Erhöhung oder Verminderung des Motorgrundgeräusches bzw. des Grundgeräusches der Brennkraftmaschine führen wird. Entsprechend wird in den Schritten SCH4.1 bzw. SCH4.2 der Korrekturfaktor FK für die Klopferkennungsschwelle KE auf einen Wert FKEFMU1>1 bzw. FKEFMU2<1 gesetzt.

In den Schritten SCH5 und SCH6 wird ggf. der Arbeitsspielzähler dekrementiert. Nach Beendigung der Umschaltphase, wenn im Schritt SCH7 erkannt wird, dass der Arbeitsspielzähler auf Null steht bzw. den Wert 0 erreicht hat, werden die Maßnahmen rückgängig gemacht, das heißt der Klopferkennungsschwellenkorrekturfaktor FK wird auf 1 gesetzt und der Referenzpegelnachführfaktor KRFTP wird auf seinen Normalwert KRFTP1 gesetzt. Danach beginnt der Programmdurchlauf erneut.

Wird dabei im Schritt SCH1 keine Änderung der Filtercharakteristik erkannt, wird im Schritt SCH9 überprüft, ob eine Umschaltphase ausgelöst ist. Wird im Schritt SCH9 festgestellt, dass eine Umschaltphase aktiv ist, dass also in einem der vorhergehenden Durchläufe eine Umschaltphase ausgelöst wurde und der Arbeitsspielzähler>0 ist, wird mit Schritt SCH5 der Arbeitsspielzähler dekrementiert. Wird dagegen im Schritt SCH9 erkannt, dass der Arbeitsspielzähler nicht aktiv ist, beginnt das Programm erneut mit dem Schritt SCH1.

Die Abkürzungen in Figur 1 bedeuten:

| | |
|---|---|
| AS: | Arbeitsspiel |
| FK: | Korrekturfaktor für die Klopferkennungsschwelle |
| FKEFMU1: | Korrekturfaktor für die Klopferkennungsschwelle bei zunehmendem Motorgeräusch, größer oder gleich 1 |
| FKEFMU1: | Korrekturfaktor für die Klopferkennungsschwelle bei abnehmendem Motorgeräusch, größer oder gleich 1 |
| KRFTP: | Referenzpegelnachführfaktor |
| KRFTP0: | Referenzpegelnachführfaktor bei instationärem Motorgeräusch (Umschaltphase) KRFTP1: Referenzpegelnachführfaktor bei stationärem Motorgeräusch (ohne Umschaltphase). |

Die Dauer der Umschaltphase kann statt durch einen Arbeitsspielzähler z. B. auch durch einen Verbrennungszähler und Timer realisiert werden. KRFTPO kann beispielsweise auch aus der Multiplikation von KRFTP mit einem Korrekturfaktor bestimmt werden.

In Figur 2 ist ein Beispiel für eine Klopferkennungseinrichtung bei einer Brennkraftmaschine dargestellt, mit der auch das erfindungsgemäße Verfahren durchgeführt werden kann. Dabei bezeichnet im einzelnen 10 einen Klopfsensor, der einem Zylinder der Brennkraftmaschine zugeordnet ist und die Geräusche im Zylinder bzw. die Geräusche der Brennkraftmaschine erfaßt und ein von diesen Geräuschen abhängiges Ausgangssignal liefert. Die erfaßten Geräusche werden über einen regelbaren Verstärker 11 und einen Filter 12 einer Demodulationsschaltung 13 zugeführt.

Der Gleichrichter der Demodulationsschaltung 13 ist mit einem Integrator 15 verbunden. Durch die Regelung des Verstärkungsfaktors kann erreicht werden, dass der Referenzpegel des Ausgangssignales weitgehend konstant und unabhängig von der Motordrehzahl bleibt. Der Integrator 15 bildet während eines kurbelwellensynchronen Meßfensters, welches von einem Steuergerät 16 in Abhängigkeit vom Ausgangssignal eines Drehzahlgebers 17 gebildet wird, das Meßsignal ikr. Das Meßsignal wird in einem Komparator 18 mit der vom Steuergerät vorgegebenen Klopfschwelle KS verglichen und das Ausgangssignal des Komparators 19 wird als Klopferkennungssignal verwendet. Vom Steuergerät 16 wird zur Klopfregelung ein Ausgangssignal an die Endstufe 20a geführt zur Auslösung der Zündung in dem betreffenden Zylinder.

Die Charakteristik des Filters 12 ist veränderbar. Beispielsweise kann ein Bandpaßfilter beispielsweise durch geeignete Ansteuerimpulse vom Steuergerät 16 so umgeschaltet werden, dass vorgebbare Frequenzen im Durchlaßbereich liegen. Die Umschaltung bzw. die Frequenzänderung kann bspw. durch entsprechende Ansteuerimpulse vom Mikroprozessor des Steuergerätes 16 ausgelöst werden. Da insbesonders die auszublendenden Hintergrundgeräusche in ihren Frequenzen von der Drehzahl abhängen, wird die Filtercharakteristik drehzahlabhängig verändert bzw. umgeschaltet.

Die Filtereinrichtung, der Gleichrichter und der Intergrator sowie gegebenenfalls weitere Komponenten können digital und/oder analog, also auch als Kombination von analogen und digitalen Elementen realisiert sein und im Steuergerät 16 einer Brennkraftmaschine, beispielsweise auch im Prozessor des Steuergerätes integriert sein. Die erforderlichen Verfahrensschritte laufen beispielsweise ebenfalls im Steuergerät 16 ab. Das Steuergerät 16, beispielsweise das übliche Steuergerät einer Brennkraftmaschine weist geeignete Prozessor- und Speichermittel zur Durchführung der erfindungsgemäßen Verfahren auf.

**Patentansprüche**

1. Verfahren zur Klopferkennung bei einer Brennkraftmaschine, mit wenigstens einem Klopfsensor, dessen Ausgangssignal einer Auswerteschaltung, die wenigstens einen Filter aufweist, dessen Charakteristik änderbar ist, zugeführt wird und bei dem Klopfen erkannt wird, wenn das erfaßte und aufbereitete Ausgangssignal des Klopfsensors einen Referenzwert, der sich in Abhängigkeit vom Geräusch der Brennkraftmaschine verändert, in vorgebbarer Weise überschreitet, **dadurch gekennzeichnet, dass** während einer Phase, während der eine Änderung der Filtercharakteristik erfolgt, ein modifiziertes Klopferkennungsverfahren durchgeführt wird, bei dem die Klopferkennungsschwelle unempfindlicher geschaltet wird und / oder die Referenzpegelnachführung modifiziert wird.

2. Verfahren zur Klopferkennung nach Anspruch 1, **dadurch gekennzeichnet, dass** für die Phase der Umschaltung eine vorgebbare Zeitdauer angenommen wird und während dieser Zeitdauer die modifizierte Klopferkennung durchgeführt wird.

3. Verfahren zur Klopferkennung nach Anspruch 1 oder 2, **dadurch gekennzeichnet, dass** zur Erkennung, ob die Umschaltphase bereits abgelaufen ist, ein Zähler dekrementiert wird, der insbesondere ein Arbeitsspielzähler ist.

4. Verfahren zur Klopferkennung nach einem der vorhergehenden Ansprüche, **dadurch gekennzeichnet, dass** ein Korrekturfaktor FK für die Klopferkennungsschwelle KE während der Umschaltphase auf einen Wert FKEFMU1 >1 oder FKEFMU2 <1 gesetzt wird.

5. Verfahren zur Klopferkennung nach Anspruch 4, **dadurch gekennzeichnet, dass** der Wert FKEFMU1 >1 gewählt wird, wenn die Umschaltung der Filtercharakteristik zu einer Erhöhung des Grundgeräusches führt und der Wert FKEFMU2 <1 gewählt wird, wenn die Umschaltung der Filtercharakteristik zu einer Verkleinerung des Grundgeräuschs führt.

6. Verfahren zur Klopferkennung nach einem der vorhergehenden Ansprüche, **dadurch gekennzeichnet, dass** die Referenzpegelnachführung während der Umschaltphase durch Wahl eines Referenzpegelnachführfaktors KRFTP0 modifiziert wird, der kleiner ist als der Referenzpegelnachführfaktors KRFTP1 ausserhalb der Umschaltphase .

7. Vorrichtung zur Klopferkennung bei einer Brennkraftmaschine, mit wenigstens einem Klopfsensor, der mit einer Auswerteschaltung in Verbindung steht und wenigstens ein Filter umfasst, dessen Charakteristik veränderbar ist, und bei dem Klopfen erkannt wird, wenn das erfasste und aufbereitete Ausgangssignal des Klopfsensors einen Referenzwert, der sich in Abhängigkeit vom Geräusch der Brennkraftmaschine verändert, in vorgebbarer Weise überschreitet, **dadurch gekennzeichnet, dass** die Vorrichtung Mittel umfasst die während einer Phase, während der eine Änderung der Filtercharakteristik erfolgt, ein modifiziertes Klopferkennungsverfahren durchführen, bei dem die Klopferkennungsschwelle unempfindlicher geschaltet wird und/oder die Referenzpegelnachführung modifiziert wird.

8. Verfahren zur Klopferkennung für eine Brennkraftmaschine mit mindestens einem Zylinder, wobei mit mindestens einem Klopfsensor (1a, 1b, ..., 1n) Signale erfasst werden, die aufgrund einer Verbrennung in dem mindestens einen Zylinder entstehen, wobei mittels einer Auswerteschaltung (20) die von dem mindestens einen Klopfsensor erfassten Signale ausgewertet werden, wobei mittels eines in der Auswerteschaltung integrierten Bandpassfilters (25) zur Auswertung der Signale ein Frequenzband der Signale ausgewählt wird, **dadurch gekennzeichnet, dass** die Mittenfrequenz des Durchlassbereichs des Bandpassfilters zylinderindividuell und/oder drehzahlabhängig verändert wird, und dass die obere und/oder die untere Eckfrequenz des Durchlassbereichs des Bandpassfilters zylinderindividuell und/oder drehzahlabhängig verändert wird.

9. Verfahren nach Anspruch 8, **dadurch gekennzeichnet, dass** die Filtermittenfrequenz und/oder die untere Eckfrequenz und/oder die obere Eckfrequenz in Abhängigkeit von der Drehzahl und/oder der Zylindernummer aus einem jeweiligen Kennfeld gelesen wird, das in einer Speichereinheit (37) des Mikrocomputers (30) gespeichert ist.

10. Verfahren nach Anspruch 8 oder 9, **dadurch gekennzeichnet, dass** bei Änderung des Durchlassbereichs des Bandpassfilters ein Klopferkennungsschwellwert mit einem vorgebbaren Schwellwert-Korrekturfaktor multipliziert wird.

11. Verfahren nach einem der Ansprüche 8 bis 10, **dadurch gekennzeichnet, dass** ein Nachführfaktor (N) für die Anpassung eines Referenzwerts bei Änderung des Durchlassbereichs des Bandpassfilters mit einem vorgebbaren Referenzwert-Korrekturfaktor multipliziert wird.

12. Vorrichtung zur Klopferkennung für eine Brennkraftmaschine mit mindestens einem Zylinder, wobei mindestens ein Klopfsensor (1a, 1b, ..., 1n) zur Erfassung von Signalen vorgesehen ist, die durch eine Verbrennung in dem mindestens einen Zylinder entstehen, wobei eine Auswerteschaltung (20) zur Auswertung der von dem mindestens einen Klopfsensor erfassten Signale vorgesehen ist, wobei in der Auswerteschaltung ein Bandpassfilter (25) vorgesehen ist, so dass zur Auswertung der Signale ein Frequenzband der Signale auswählbar ist, **dadurch gekennzeichnet, dass** eine Ansteuereinheit (31) vorgesehen ist, dass mittels der Ansteuereinheit (31) die Mittenfrequenz des Durchlassbereichs des Bandpassfilters zylinderindividuell und/oder drehzahlabhängig veränderbar ist, und dass mittels der Ansteuereinheit (31) die obere und/oder die untere Eckfrequenz des Durchlassbereichs des Bandpassfilters zylinderindividuell und/oder drehzahlabhängig veränderbar ist.

13. Vorrichtung nach Anspruch 12, **dadurch gekennzeichnet, dass** in einem Mikrocomputer (30) eine Speichereinheit (37) vorgesehen ist, die die Mittenfrequenz und/oder die untere Eckfrequenz und/oder die obere Eckfrequenz des Bandpassfilters in Abhängigkeit von der Drehzahl und/oder der Zylindernummer in jeweils einem Kennfeld enthält.

14. Vorrichtung nach Anspruch 12 oder 13, **dadurch gekennzeichnet, dass** die Speichereinheit (37) ein Schwellwert-Korrekturfaktor enthält, der bei Änderung des Durchlassbereichs des Bandpassfilters mit einem Klopferkennungsschwellwert multiplizierbar ist.

15. Vorrichtung nach einem der Ansprüche 12 bis 14, **dadurch gekennzeichnet, dass** die Speichereinheit (37) ein Referenzwert-Korrekturfaktor enthält, der mit dem Nachführfaktor (N) für einen Referenzwert bei Änderung des Durchlassbereichs des Bandpassfilters multiplizierbar ist.

**Claims**

1. Method for detecting knocking in an internal combustion engine, having at least one knocking sensor whose output signal is fed to an evaluation circuit which has at least one filter whose characteristic can be changed, and with which knocking is detected if the sensed and conditioned output signal of the knocking sensor exceeds, in a predefinable fashion, a reference value which changes as a function of the noise of the internal combustion engine, **characterized in that** during a phase during which the filter characteristic changes, a modified knocking-detection method is carried out in which the knocking-detection threshold is switched to a less sensitive setting and/or the tracking of the reference level is modified.

2. Method for detecting knocking according to Claim 1, **characterized in that** a predefinable time period is assumed for the switching-over phase and the modified knocking detection is carried out during this time period.

3. Method for detecting knocking according to Claim 1 or 2, **characterized in that** in order to detect whether the switching-over phase has already expired, a counter is decremented, which is in particular a working cycle counter.

4. Method for detecting knocking according to one of the preceding claims, **characterized in that** a correction factor FK for the knocking-detection threshold KE is set to a value FKEFMU1 > 1 or FKEFMU2 < 1 during the switching-over phase.

5. Method for detecting knocking according to Claim 4, **characterized in that** the value FKEFNU1 > 1 is selected if the switching over of the filter characteristic leads to an increase in the basic noise and the value FKEFMU2 < 1 is selected if the switching over of the filter characteristic leads to a reduction in the basic noise.

6. Method for detecting knocking according to one of the preceding claims, **characterized in that** the tracking of the reference level during the switching-over phase is modified by selecting a reference level tracking factor KRFTP0 which is less than the reference level tracking factor KRFTP1 outside the switching-over phase.

**7.** Device for detecting knocking in an internal combustion engine, having at least one knocking sensor which is connected to an evaluation circuit and comprises at least one filter whose characteristic can be changed, and with which knocking is detected if the sensed and conditioned output signal of the knocking sensor exceeds, in a predefinable fashion, a reference value which changes as a function of the noise of the internal combustion engine, **characterized in that** the device comprises means which carry out a modified knocking-detection method during a phase during which the filter characteristic changes, during which method the knocking-detection threshold is switched to a less sensitive setting and/or the tracking of the reference level is modified.

**8.** Method for detecting knocking for an internal combustion engine having at least one cylinder, wherein at least one knocking sensor (1a, 1b, ... 1n) is used to sense signals which are produced as a result of a combustion in the at least one cylinder, wherein the signals sensed by the at least one knocking sensor are evaluated by means of an evaluation circuit (20), wherein a frequency band of the signals is selected by means of a bandpass filter (25), integrated into the evaluation circuit, for evaluating the signals, **characterized in that** the centre frequency of the transmission range of the bandpass filter is changed on a cylinder-specific basis and/or as a function of the rotational speed, and **in that** the upper and/or the lower cut-off frequency of the transmission range of the bandpass filter is changed on a cylinder-specific basis and/or as a function of the rotational speed.

**9.** Method according to Claim 8, **characterized in that** the centre frequency of the filter and/or the lower cut-off frequency and/or the upper cut-off frequency are read in from a respective characteristic diagram as a function of the rotational speed and/or the number of cylinders, said characteristic diagram being stored in a memory unit (37) of the microcomputer (30).

**10.** Method according to Claims 8 or 9, **characterized in that** when the transmission range of the bandpass filter changes, a knocking-detection threshold value is multiplied by a predefinable threshold-value correction factor.

**11.** Method according to one of Claims 8 to 10, **characterized in that** a tracking factor (N) for the adaptation of a reference value when the transmission range of the bandpass filter changes is multiplied by a predefinable reference-value correction factor.

**12.** Device for knocking detection for an internal combustion engine having at least one cylinder, wherein at least one knocking sensor (1a, 1b, ..., 1n) is provided for sensing signals which are produced as a result of a combustion in the at least one cylinder, wherein an evaluation circuit (20) is provided for evaluating the signals sensed by the at least one knocking sensor, wherein a bandpass filter (25) is provided in the evaluation circuit so that the frequency band of the signals can be selected in order to evaluate the signals, **characterized in that** a drive unit (31) is provided, **in that** the centre frequency of the transmission range of the bandpass filter can be changed by means of the drive unit (31) on a cylinder-specific basis and/or as a function of the rotational speed, and **in that** the upper and/or the lower cut-off frequency of the transmission range of the bandpass filter can be changed by means of the drive unit (31) on a cylinder-specific basis and/or as a function of the rotational speed.

**13.** Device according to Claim 12, **characterized in that** a memory unit (37) which contains the centre frequency and/or the lower cut-off frequency and/or the upper cut-off frequency of the bandpass filter as a function of the rotational speed and/or the number of cylinders in, in each case, one characteristic diagram is provided in a microcomputer (30).

**14.** Device according to Claims 12 or 13, **characterized in that** the memory unit (37) contains a threshold-value correction factor which can be multiplied by a knocking-detection threshold value when the transmission range of the bandpass filter changes.

**15.** Device according to one of Claims 12 to 14, **characterized in that** the memory unit (37) contains a reference-value correction factor which can be multiplied by a tracking factor (N) for a reference value when the transmission range of the bandpass filter changes.

## Revendications

**1.** Procédé de détection du cliquetis d'un moteur à combustion interne comprenant au moins un capteur de cliquetis dont le signal de sortie est appliqué à un circuit d'exploitation ayant au moins un filtre dont la caractéristique est variable et qui permet de reconnaître le cliquetis lorsque le signal de sortie saisi et préparé, fourni par le capteur de cliquetis, dépasse d'une manière prédéfinie une valeur de référence qui varie en fonction des bruits du moteur à combustion interne,
**caractérisé en ce que**
pendant une phase au cours de laquelle de la caractéristique du filtre varie, on applique un procédé de détection modifié du cliquetis en fixant le seuil de détection de cliquetis à un niveau moins sensible et/ou en modifiant l'asservissement du niveau de référence.

**2.** Procédé de détection de cliquetis selon la revendication 1,
**caractérisé en ce que**
pour la phase de la commutation on prend une durée prédéfinie et pendant cette durée on effectue la détection modifiée du cliquetis.

**3.** Procédé de détection de cliquetis selon la revendication 1 ou 2,
**caractérisé en ce que**
pour détecter si la phase de commutation est déjà terminée, on décrémente un compteur, notamment un compteur de cycles de travail.

**4.** Procédé de détection de cliquetis selon l'une des revendications précédentes,
**caractérisé en ce qu'**
on fixe un coefficient de correction FK pour le seuil de détection de cliquetis KE pendant la phase de commutation sur une valeur FKEFMU 1 >1 ou FKEFMU2 <1.

**5.** Procédé de détection de cliquetis selon la revendication 4,
**caractérisé en ce qu'**
on choisit la valeur FKEFMU1 >1 si la commutation de la caractéristique du filtre se traduit par une augmentation du bruit de fond et on choisit la valeur FKEFMU2 < 1 si la commutation de la caractéristique du filtre aboutit à une réduction du bruit de fond.

**6.** Procédé de détection de cliquetis selon l'une des revendications précédentes,
**caractérisé en ce qu'**
on modifie l'asservissement du niveau de référence pendant la phase de commutation par le choix d'un coefficient d'asservissement de niveau de référence KRFTP0 inférieur au coefficient d'asservissement du niveau de référence KRFTP1 en dehors de la phase de commutation.

**7.** Dispositif de détection du cliquetis d'un moteur à combustion interne comportant au moins un capteur de cliquetis relié à un circuit d'exploitation et ayant au moins un filtre dont la caractéristique est variable et qui détecte le cliquetis si le signal de sortie du capteur de cliquetis, saisi, et traité, dépasse d'une manière prédéterminée une valeur de référence qui varie en fonction du bruit du moteur à combustion interne,
**caractérisé par**
des moyens qui, pendant une phase au cours de laquelle la caractéristique de filtre varie, exécutent un procédé modifié de détection de cliquetis selon lequel on rend le seuil de détection de cliquetis moins sensible et/ ou on modifie l'asservissement du niveau de référence.

**8.** Procédé de détection du cliquetis pour un moteur à combustion interne ayant au moins un cylindre, au moins un capteur de cliquetis (1a, 1b,..., 1n) saisissant des signaux engendrés par la combustion dans le cylindre,
un circuit d'exploitation (20) exploitant les signaux saisis par le capteur de cliquetis,
un filtre à bande passante (25) intégré dans le circuit d'exploitation sélectionnant une bande de fréquence des signaux pour l'exploitation des signaux,
**caractérisé en ce qu'**
on modifie la fréquence centrale de la bande passante du filtre à bande passante de façon individuelle par cylindre et/ou en fonction de la vitesse de rotation, et
on modifie la fréquence limite supérieure et/ou inférieure de la plage passante du filtre à bande passante de manière individuelle par cylindre et/ou en fonction de la vitesse de rotation.

**9.** Procédé selon la revendication 8,
**caractérisé en ce qu'**
on extrait la fréquence centrale du filtre et/ou la fréquence limite inférieure et/ou la fréquence limite supérieure en fonction de la vitesse de rotation et/ou du numéro du cylindre dans un champ de caractéristiques correspondant enregistré dans une mémoire (37) du micro-ordinateur (30).

**10.** Procédé selon la revendication 8 ou 9,
**caractérisé en ce qu'**
en modifiant la plage passante du filtre à bande passante on multiplie le seuil de détection du cliquetis par un coefficient de correction de seuil, prédéfini.

**11.** Procédé selon la revendication 8 à 10,
**caractérisé en ce qu'**
on multiplie le coefficient d'asservissement (N) pour adapter une valeur de référence lors des variations de la plage passante du filtre à bande passante par un coefficient de correction de valeur de référence, prédéfini.

**12.** Dispositif de détection de cliquetis pour un moteur à combustion interne ayant au moins un cylindre, au moins un capteur de cliquetis (1a, 1b, ..., 1n) étant prévu pour saisir des signaux engendrés par la combustion dans le ou les cylindres, un circuit d'exploitation (20) assurant l'exploitation des signaux saisis par le capteur de cliquetis, le circuit d'exploitation comportant un filtre à bande passante (25) de façon à sélectionner une bande de fréquence des signaux pour exploiter les signaux,
**caractérisé par**
une unité de commande (31) qui modifie la fréquence centrale de la plage passante du filtre à bande passante, de manière individuelle par cylindre et/ou en fonction de la vitesse de rotation, et

l'unité de commande (31) modifie la fréquence limite supérieure et/ou la fréquence limite inférieure de la plage passante du filtre à bande passante d'une manière individuelle par cylindre et/ou en fonction de la vitesse de rotation.

**13.** Dispositif selon la revendication 12,
**caractérisé en ce qu'**
un micro-ordinateur comporte une mémoire (37) qui contient la fréquence centrale et/ou la fréquence limite inférieure et/ou la fréquence limite supérieure du filtre à bande passante en fonction de la vitesse de rotation et/ou du numéro du cylindre dans un champ de caractéristiques.

**14.** Dispositif selon l'une des revendications 12 ou 13,
**caractérisé en ce que**
l'unité de mémoire (37) contient un coefficient de correction de seuil qui en cas de variation de la plage passante du filtre à bande passante est multiplié par un seuil de détection de cliquetis.

**15.** Dispositif selon l'une des revendications 12 à 14,
**caractérisé en ce que**
l'unité de mémoire (37) contient un coefficient de correction de référence qui est multiplié par le coefficient d'asservissement (N) pour une valeur de référence en cas de variation de la plage passante du filtre à bande passante.

Fig. 1

Fig 3

SCH1
Änderung der
Filtercharakteritik

NEIN

JA    SCH2

AS-Zähler = Startwert
KRFTP = KRFTP0

SCH3
Erhöhung des
Motorgeräuschs

JA          NEIN

SCH 4.1      SCH4.2

FK = FKEFMU1    FK = FKEFMU2

SCH 9
AS-Zähler = 0

NEIN        JA

SCH5
zzyl = 0

NEIN

JA    SCH6

dekrementiere
AS-Zähler

SCH7
AS-Zähler = 0

NEIN

JA    SCH8

KRFTP = KRFTP1
FK = 1

Fig 2